Europäisches Patentamt

European Patent Office

Office européen des brevets

(11) Publication number: **0 074 492**
**A2**

# EUROPEAN PATENT APPLICATION

(21) Application number: **82107188.3**

(22) Date of filing: **09.08.82**

(51) Int. Cl.³: **B 60 C 27/10**

(30) Priority: **11.09.81 IT 2286381 U**

(43) Date of publication of application:
**23.03.83 Bulletin 83/12**

(84) Designated Contracting States:
**AT BE CH DE FR GB LI NL SE**

(71) Applicant: **Seggio, Gianfranco**
**24, via Leonardo Da Vinci**
**I-20094 Corsico (Milan)(IT)**

(72) Inventor: **Seggio, Gianfranco**
**24, via Leonardo Da Vinci**
**I-20094 Corsico (Milan)(IT)**

(74) Representative: **Marietti, Giuseppe**
**CENTRO DI CONSULENZA IN PROPRIETA'**
**INDUSTRIALE viale Caldara, 43**
**I-20122 Milano(IT)**

(54) A device for stretching snow-chains on wheels.

(57) The invention relates to a device for stretching snow chains on wheels or tires, by exerting a pull on at least one resiliently deformable element (16) pivotally connected to one end (10') of the mounted chain, until hooking said deformable element (16) to the opposite end (10") of the mounted chain. The device comprises a cable (34) with a handgrip (36) and a knot (38). The cable can be inserted in an opening (26) carried by a plate (22) at the free end of the resilient element (16) and can be fixed in a groove (32) near the opposite end (10") of the mounted chain, by means of its knot (38). By exerting a pull on said handgrip (36) the chain and the resilient element (16) are stretched until hooking a bore (24) in said plate (22) on a pin (28) carried by said chain opposite end (10"). The cable can then be detached and recovered.

Fig.2

**0074492**

This invention relates to a device for
stretching snow-chains when mounted on  wheels,
by means of a pull exerted on at least one resiliently deformable element fixed  on
at least one side of the mounted chain  in correspondence with a first point of same, and by hooking
said elastic element to a second point of the chain
spaced out from the first one.

The invention relates particularly    but not
exlusively, to wheel chains formed by a plurality
of U  shaped elements radially fixed one the wheel
and connected between them by spacing levers pivoted
 to the arms at each U element.

Resilient pulling means, for example rubber
strips or the like are mounted at one end of the so
formed chain, with hooking means for cooperating
with corresponding retaining means placed at the
other end of the chain.

In order to obtain this hooking, by creating
in the chain assembly a sufficient stretch to firmly maintain the same in position during the use of
the vehicle, it is necessary to exercise a strong
force, which the consumer not always can do.Further the
chain  is necessarely devoid of big prodruding parts
for grasping the same, as these parts would disturb
the usual working of the chain hitting againt parts
of the coachwork.

An object of this invention is then to provide
a device which allows said stretching of the chain
by pull and hooking at one or more resiliently
deformable elements in a simple and easy way, with limited efforts of the customer and avoiding the presence, on the chain, of protruding or cumbersome parts which may obstacle the usual utilization of same chain or which may hit during the rotation of the wheel provided with the chain against parts of the coatchwork.

According to the invention, these and other objects are achieved by means of a stretching device, for the above cited uses which comprises a flexible traction means, for example preferably a cable, provided with a handgrip; an element for removably fixing the traction means near said second point of the chain; and a sliding retaining means on the resiliently deformable element, acting between the handgrip and the removable fixing zone of said fraction means.

Thus, as it will better result hereinafter, it is possible to obtain said stretching, by removably fixing the traction means or cable near the second point of the chain by making said cable to pass in a sliding retaining mode on the elastically deformable element and by exerting a pull through the handgrip, sufficient for submitting to the desired and necessary effort the resiliently deformable element, till to obtain the hooking of same near the second point of the chain. Once made the hooking, the cable is removed from this operative position and get back for its utilisation in the pull of other resiliently deformable elements or it can be placed in the vehicle not to encumber or create

- 3 -

0074492

drawbacks during the running of same vehicle.

These and others features and characteristics
of the invention will be now described with reference to an embodiment thereof diagrammatically shown in the attached drawing, wherein:

Figure 1 is a diagrammatic prespective view of
the elements forming the stretching device, in their
condition immediately preceding said stretching operation.

Figure 2 is a front view of the elements of
said device in condition of reciprocal constraint
for the chain stretching.

Figure 3 is a partial view as in figure 2,
showing the device at the end of the stretching
and hooking stage.

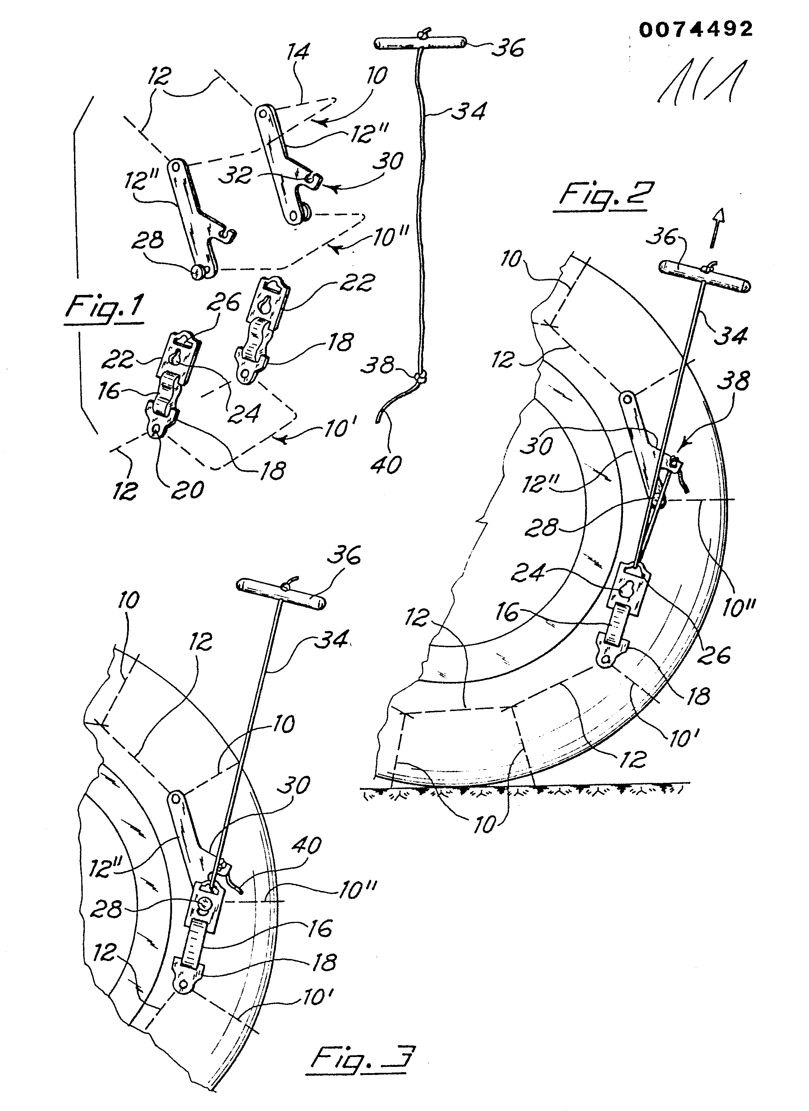

Referring to figures and firstly to figure 1,
the invention is now described with reference to a
snow-chain for vehicles essentially formed by a
plurality of U- shaped elements 10, which are
connected between them by means of spacing and positioning levers 12 pivotally connected to the
arms 14 of each element 10. The elements 10 and
levers 12 form an assembly which may be longitudinally disposed on the ground to be mounted on a wheel by
means of a simple progressing of the wheel on same
assembly. Obviously, the lenght of said assembly
or chain is proportional to the wheel circumference
and the chain is defined by a first U-element 10 and
by a last U-element 10". In order to stretch the chain
on the wheel, it is necessary that the U-elements 10'
and 10'' are connected between them by means of resiliently deformable elements, so designed to exertx
pull sufficient to maintain in position the chain
on the wheel, avoiding all relative movements under the efforts of the use.

For this reason, on each side of the chain a
deformable element is provided for,which element is
constituted for example by a rubber part 16
or the like shaped as a strip, which is connected
through a first buckle 18 with the first U-element
10' for instance by means of free articulation
pins 20.

At the other end the deformable element 16 carries a second buckle 22 showing a first hooking opening 24
and a second opening 26 adapted to slidingly retain a flexible
traction means which will be described later on. The last U-element
10'' carries a pin 28 which is able to be inserted
in the opening 24 to effect a hooking of buckle 22
to same. Said pin 28 is placed for example at the end
of a spacing lever 12'' showing a sidewardly protruding arm 30 provided with a groove 32 directed toward
the outside.

The device further comprises a flexible traction
means, for example, in the simplest case, formed by
a cable 34 having a handgrip 36 at one end and a removable fixing element along the same, said fixing element being preferably in the form of a thickening,
as a knot 38 made on the cable 34 near its free
end, at a given distance from handgrip 36.

The shown device operates as follows. Once ma-

de the winding of the chain on the wheel, the free end 40 of cable 34 is made passing in the hole 26 of buckle 22 and the knot 38 is carried in correspondence of groove 32, wherein it is removably hooked. By exerting then a pull, as indicated by arrow x in figure 2, on the handgrip 36, it is possible to stretch the elastic element 16 till to obtain the insertion of the protruding element 28 into opening 24 of buckle 22, with hooking of the resiliently deformable element and stretching of the chain. This operation is diagramatrically and partially indicated in figures 2 and 3.

Once the hooking is made the cable 34 may be taken away acting on the free end of same, opposite to the handgrip 36 and downside the knot 38 to take off the cable from groove 32 and hole 26, to allow its recovery and use for another elastic element or placing the same into the vehicle, in a position where it does not obstacle the free running of the wheel provided with chain. Obviously, when the disassembling of the chain is required, the initeal traction sufficient to unhook the buckle 22 from pin 28, can be exerted as previously described, by means of the same cable 34.

0074492

## CLAIMS

1. - A device for stretching snow-chains mounted on wheels, by pulling at least one resiliently deformable element fixed at least on one side of the mounted chain in correspondence of a first point of same, and by hooking said element to a second point of the chain, spaced from the first one, said device being characterized in that it comprises: a flexible pulling means provided with a handgrip, a removable fixing element for said pulling means near said second point of the chain, and a sliding retaining element on said resiliently deformable element acting between said handgrip and said removable fixing element of said pulling means.

2. - A device according to claim 1, wherein said pulling means is formed by a cable having, in position opposite to said handgrip, a thickening for its insertion in a groove shown by said chain near said its second point.

3. - A device according to claim 1 or 2, wherein said resiliently deformable element, at its end opposite to that fixed to said chain first point carries a hooking means and outside said hooking means, a sliding seat wherein said pulling means or cable may slide.

4. - A device according to claim 3, wherein said seat is in the form of a ring carried, by a plate further forming said hooking means.

5. - A device according to one of the preceding claims wherein said chain first point is placed near one of the chain free ends, when it is open, and the second point is placed near the other end thereof.

6. - A device according to claim 5, wherein two resiliently deformable elements are provided on two sides of the chain when mounted on the wheel.

0074492

Fig.1

Fig.2

Fig.3